(19) Europäisches Patentamt
European Patent Office
Office européen des brevets

(11) **EP 1 887 562 B1**

(12) **EUROPEAN PATENT SPECIFICATION**

(45) Date of publication and mention of the grant of the patent:
**28.04.2010 Bulletin 2010/17**

(51) Int Cl.:
***G10L 15/18*** *(2006.01)*

(21) Application number: **06016867.1**

(22) Date of filing: **11.08.2006**

(54) **Speech recognition by statistical language model using square-root smoothing**

Spracherkennung mittels eines statistischen Sprachmodells unter Verwendung von Quadratwurzelglättung

Reconnaissance de la parole avec modèle statistique de language utilisant un lissage en racine carrée

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**13.02.2008 Bulletin 2008/07**

(73) Proprietor: **Harman Becker Automotive Systems GmbH**
**76307 Karlsbad (DE)**

(72) Inventor: **Wirsching, Günther, Prof.**
**89077 Ulm (DE)**

(74) Representative: **Grünecker, Kinkeldey, Stockmair & Schwanhäusser Anwaltssozietät Leopoldstrasse 4 80802 München (DE)**

(56) References cited:
• **FENG-LONG HUANG ET AL: "Analyzing the properties of smoothing methods for language models" 2001 IEEE INTERNATIONAL CONFERENCE ON SYSTEMS MAN AND CYBERNETICS. SMC 2001. TUCSON, AZ, OCT. 7 - 10, 2001, IEEE INTERNATIONAL CONFERENCE ON SYSTEMS, MAN AND CYBERNETICS, NEW YORK, NY : IEEE, US, vol. VOL. 1 OF 5, 7 October 2001 (2001-10-07), pages 512-517, XP010567622 ISBN: 0-7803-7087-2**
• **CHEN S F ET AL: "An empirical study of smoothing techniques for language modeling" COMPUTER SPEECH AND LANGUAGE, ELSEVIER, LONDON, GB, vol. 13, no. 4, October 1999 (1999-10), pages 359-393, XP004418752 ISSN: 0885-2308**

**Description**

**Field of Invention**

The present invention relates to a method for statistical language modeling employing statistical smoothing. The invention, in particular, relates to a method for speech recognition on the basis of statistical language modeling by means of the calculation of smoothed probabilities and, particularly, discounting the probabilities of observed events.

**Background of the Invention**

Statistical language modeling is the attempt to capture regularities of natural language and, thus, an essential component of natural language systems for human-computer interaction. Statistical language models aim to estimate the distribution of natural language as accurate as possible. They play a central role in various natural language applications as, e.g., speech recognition, machine translation, text-to-speech systems and spelling correction.

Speech recognition may be considered as a particular important application for statistical language modeling. Speech recognition systems, i.e. apparatus for converting an acoustic signal to a sequence of words or strings, become increasingly prevalent nowadays. In the last years, due to dramatic improvement in speech recognition technology, high performance speech analyzing, recognition algorithms and speech dialog systems have commonly been made available. Present day speech input capabilities comprise voice dialing, call routing, document preparation, etc. A speech dialog system can, e.g., be employed in a car to allow the user to control different devices such as a mobile phone, a car radio, a navigation system and/or an air condition.

During speech recognition verbal utterances, either isolated words or continuous speech, are captured by a microphone or a telephone, for example, and converted to analog electronic signals that subsequently are digitalized. The digital signals are usually subject to a subsequent spectral analysis. Representations of the speech waveforms sampled typically at a rate between 6.6 kHz and 20 kHz are derived from the short term power spectra and represent a sequence of characterizing vectors containing values of what is generally referred to as features/feature parameters. The values of the feature parameters are used for the estimation of the probability that the portion of the analyzed waveform corresponds to, for example, a particular entry, i.e. a word, in a vocabulary list.

Whereas some attempts have been made to incorporate linguistic structures and theories as well as semantic a priori knowledge in statistical language modeling and whereas approaches are presently available that try to make advantage of statistical information across contexts, e.g., the aggregate Markov model and the neural probabilistic language model, the most popular and highly efficient n-gram language modeling is not concerned about the specific nature of language.

In fact, n-gram modeling relies on a discrete enumeration of predictive contexts specifying a relationship to one or more words that have already been seen wherein the words are taken as arbitrary symbols without deep structure and thought behind them. Each word is predicted from the preceding n - 1 words. It should be noted that many possible n-grams are unseen in any reasonable training corpora giving rise to a sparse data problem (see below).

Usually, the probability of a sentence p(s) is calculated by a product of conditional probabilities for the i-th word $w_i$ of the sentence

$$p(s) = \prod_{i=1}^{n} p(w_i \mid h_i)$$

where $h_i = (w_1, .., w_{i-1})$ is called the history. An n-gram reduces the dimensionality of the probability problem by means of the Markov approach, namely by assuming that a word is affected by its prior local context, i.e. the last few preceding words $p(w_i \mid h_i) = p(w_i \mid w_i\text{-}n+1, .., w_{i-1})$. Common choices are trigrams (n=3) for relatively large training corpora ( e.g., some million of words) and bigrams (n=2) for smaller training corpora.

Even for large corpora, however, calculation of bigram and trigram probabilities represents a sparse estimation problem, since the vast majority of word combinations occur very infrequently. Therefore, a straight-forward maximum-likelihood estimation approach is not preferable. Instead class-based n-gram models have been proposed that estimate parameters for words clustered in classes. In addition, various smoothing techniques have been developed to alleviate the problem of data sparseness including so-called discounting methods that take some probability measure from seen events (n-grams) and redistributes it to unseen events.

Chen et al., in a paper entitled "An empirical study of smoothing techniques for language modeling", Computer Speech and Language, vol. 13, no. 4, October 1999, pages 359-393 as well as Feng-Long Huang et al. in a paper entitled "Analyzing the properties of smoothing methods for language models", 2001 IEEE describe smoothing methods for language models to estimate the probability of n-grams.

A popular smoothing technique is based on the Good-Turing Estimator for estimating how much of a given probability distribution should be "held out" to account for previously unseen events. In practice, the Good-Turing smoothing method, however, often causes numerical instabilities and counter-intuitive probabilities, in particular, for a small amount of observed data as it is characteristic for the problem of statistical language modeling. Depending on the amount of training data the n-gram probability may be employed or back-off to the (n-1)-gram probability (Katz's Backing-Off) may be preferred.

According to other common smoothing methods the probability of each observed n-gram is decreased by subtracting a constant (absolute discounting) or by discounting proportional to the original counts (linear discounting). In both approaches an arbitrary parameters has to be specified first without a sound mathematical foundation given for the discounting methods. What is more, linear discounting shows a strong tendency to underestimate probabilities of seen events with large counts whereas absolute discounting fails in accurately determining probabilities of seen events with small counts.

It should also be noted that in conventional methods often very small numbers have to be processed which not only may result in inaccurate computation, e.g., rounding errors, but also may extend the computing time.

Given the above-mentioned drawbacks of the state of the art there is a need for an improved method for statistical language modeling and, in particular, speech recognition employing robust statistical smoothing.

**Description of the invention**

The above-mentioned problems are solved or at least alleviated by the method for statistical language modeling, in particular, applicable for speech recognition, according to claim 1, comprising the steps of

providing a predetermined number of words in a predetermined order;

providing a training corpus comprising a predetermined number of sequences of words, wherein each of the sequences of words consists of the provided predetermined number of words in the predetermined order followed by at least one additional word;

providing word candidates and for each word candidate calculating on the basis of the training corpus the probability that the word candidate follows the provided predetermined number of words;

determining at least one word candidate for which the calculated probability exceeds a predetermined threshold; wherein

the probabilities of the word candidate are calculated based on smoothed maximum-likelihood probabilities calculated for the sequences of words of the training corpus that for all of the sequences of words of the training corpus are larger than or equal to a predetermined real positive number less than or equal to the reciprocal value of the predetermined number of sequences of words of the training corpus.

The predetermined number of words is provided as text or as speech signals, for example. In the simplest case the predetermined number of words in a predetermined order is one. Herein, words in a predetermined order as well as sequences of words are also termed as sentences. Words are understood as linguistic units usually comprising phonemes. Statistical language modeling refers to assigning probability distributions of words and sentences of a language.

The probability of each of the word candidates is calculated based on the maximum-likelihood probability (maximum-likelihood estimator), i.e. $c_j / S$, for each sequence of words comprising or consisting of the provided predetermined number of words in the predetermined order followed

by the word candidate, if none of the observed frequencies (counts) $c_j$ of the sequences of words of the training corpus falls below the predetermined positive real number m that is less than or equal to the reciprocal value of the predetermined number of sequences of words multiplied by the overall frequency of all of the predetermined number of sequences of words of the training corpus $S = \sum_{j=1}^{N} c_j$, i.e. if $c_j \geq mS \ \forall \ j$. In this case, smoothing is not necessary and computer resources can be saved without deteriorating the reliability of the results obtained by the present method.

Furthermore, if $c_j < mS$ for at least one j, where $c_j$ denotes the observed frequency of the j-th one of N sequences of words of the training corpus (i.e. events $e_j$) and S is the overall frequency of all observed sequences of words of the training corpus $S = \sum_{j=1}^{N} c_j$ and m is the predetermined real positive number less than or equal to the reciprocal value of the predetermined number N of sequences of words, the calculation of the probabilities of the word candidates $p_j$ comprises the following steps:

a) calculating real numbers $\alpha$ by

$$\alpha = \frac{\sum_{j=1}^{N} \overline{c}_j - S}{\sum_{j=1}^{N} \sqrt{\widetilde{c}_j}}$$

with

$$\widetilde{c}_j \equiv \begin{cases} c_j(S - c_j)/S, & \text{if } c_j > mS \\ 0, & \text{else} \end{cases} \quad \text{and} \quad \overline{c}_j = \begin{cases} c_j, & \text{if } c_j > mS \\ mS, & \text{else} \end{cases}$$

b) calculating smoothed counts $c_j' = \overline{c}_j - \alpha \sqrt{\widetilde{c}_j}$

c) calculating the smoothed probabilities $p_j$ by $p_j = c_j' / S$, and

d) determining the probability of each of the word candidates from $p_j$, if $p_j \geq m$.

A sequence of words of the training corpus is also called an n-gram, wherein n denotes the number of words of the sequence. The training corpus can comprise n-grams, e.g, bigrams and/or trigrams, and/or four-grams, stored in an efficient data structure as, e.g., a suffix tree or a different tree structure. The sequences of words occur in the training corpus with particular frequencies (counts).

At least one word candidate is determined with a probability above a predetermined threshold to supplement a sequence starting with the provided predetermined number of words by the determined candidate word. The predetermined threshold may by a predetermined real number between zero and one or may be a relative threshold given by some predetermined difference to the average probability value calculated for the sequences of words of the training corpus, or may be one of the lower probability values that are calculated, etc.

According to the present invention the probability of each of the word candidates is estimated based on a smoothed likelihood-probability of a sequence of words of the training corpus (see also below), wherein the smoothed likelihood-probability is calculated in a manner that guarantees that it does not fall below a predetermined real positive number that is less than or equal to the reciprocal value of the predetermined number of sequences of words of the training corpus. In particular, the probability of each of the word candidates can be determined to be equal to the smoothed likelihood-probability of the sequence of words of the training corpus that comprises or consists of the provided number of words followed by the word candidate or it may be determined as this smoothed likelihood-probability scaled with some factor.

Efficient discounting is achieved which allows for a robust (in terms of the stability of calculation procedures) and reliable statistical language modeling. In particular, the inventive method is suitable for relatively small training corpora, since it alleviates the sparse data problem of statistical language modeling and speech recognition.

The described algorithm has proven to be reliable and robust in experiments carried out by the inventor. The probability of each of the word candidates can be taken as $p_j$. It may be preferred, however, to exponentiate $p_j$ by a constant a, i.e. $p_j^a$, where a is a positive real number, in order to add a weight to the language model.

If at least one $p_j$ as calculated in step c) is less than the predetermined positive real number m that is less than or equal to the reciprocal value of the predetermined number of sequences of words N of the training corpus, the probability of each word candidate can advantageously be determined by iteration of the above steps a) to c) according to the inductive sequence of probabilities $p_j^{(n)}$ starting with the maximum-likelihood probability $p_j^{(0)} = c_j / S$ and further defined by $p_j^{(n)} = \langle (p_j^{(n-1)}) \rangle$ where $\langle \rangle$ denotes iterative calculation of the $p_j^{(n)}$ by means of iteratively calculated smoothed counts $c_j'$. This means that calculation of the smoothed counts $c_j' = \overline{c}_j - \alpha\sqrt{\widetilde{c}_j}$, $j = 1,.., N$ is performed by $\overline{c}_j^{(n)}$

depending on $\bar{c}_j^{(n-1)}$ and $\underset{-}{\bar{c}}_j^{(n)}$ depending on $\tilde{c}_j^{(n-1)}$. This iteration procedure shows fast convergence and guarantees $p_j \geq m \; \forall \; j$.

According to an example of the herein disclosed method, the probability of each of the word candidates is calculated on the basis of n-grams and (n-1)-grams, i.e. standard backing-off or interpolation according to $p_j[\text{n-gram}] = \lambda \, c_j[\text{n-gram}]/S[\text{n-gram}] + (1-\lambda) \, p_j[(\text{n-1})\text{-gram}]$ with $0 \leq \lambda \leq 1$ and $p_j$ denoting the probability can be chosen according to various smoothing interpolation techniques (see, e.g., "An Empirical Study of Smoothing Techniques for Language Modeling" by Stanley F. Chen and Joshua T. Goodman, Technical Report TR-10-98, Computer Science Group, Harvard University, 1998). In particular, the Kneser-Ney algorithm may be employed. Such techniques may further improve the reliability and over-all performance of the inventive method.

The present invention, particularly, provides a method for speech recognition, comprising the steps of

providing a database comprising n-grams;

detecting and digitizing a verbal utterance including spoken words; and

recognizing at least one of the spoken words on the basis of the n-grams of the database and by means of one of the embodiments of the method for statistical language modeling as discussed above.

Thereby, reliable speech recognition can be made available. According to this method of speech recognition the at least one of the spoken words is recognized on the grounds of one or more recognized preceding words and it is identical to the at least one word candidate for which the calculated probability exceeds a predetermined threshold that is determined according to an example of the herein disclosed method for statistical language modeling. It should be noted that this threshold is different from the predetermined positive real number m mentioned above. The n-grams of the database represent the training corpus and the (digitized) spoken words the provided predetermined number of words in the predetermined order of the method for statistical language modeling of claim 1.

The method for speech recognition may further comprise generating as a recognition result an N-best list of word candidates determined by means of the method for statistical language modeling according to an example of the herein disclosed method for statistical language modeling, wherein each word candidate is assigned a score representing the probability of the word candidate to follow a predetermined number of spoken and already recognized words.

According to this embodiment, e.g., two words of a trigram being part of a training corpus and stored in the database, may be considered as already recognized. The speech signal to be recognized may comprise a third word that remains to be recognized. For word candidates the probability that the respective word candidate follows the provided already recognized two words of the detected speech signal is calculated on the basis of the training corpus; and word candidates for which the calculated probabilities exceed a predetermined threshold are determined.

The probability of each word candidate is calculated based on a smoothed maximum-likelihood probability for each n-gram, wherein the smoothed maximum-likelihood probability by construction is larger than or equal to a predetermined real positive number that is less than or equal to the reciprocal value of the number of n-grams stored in the database.

An N-best list is generated consisting of a sequence of word candidates ranked according to their determined probabilities. Providing such an N-list is, e.g., advantageous in speech dialog systems outputting synthetic speech signals on the basis of the recognition results. The recognition results may, thus, be acknowledged or rejected by a user of a speech dialog system. In case of rejection of a recognition result the next entry (word candidate with the second highest probability value, if the word candidate wit the highest probability value is rejected, for example) of the generated N-best list can be offered to the user.

Besides speech recognition machine translation and text-to-speech methods can advantageously make use of an example of the method for statistical language modeling. Accordingly, it is provided a method for machine translation of a sequence of words, comprising

providing a database comprising n-grams; and

translating the n+1-th word of the sequence of words on the basis of n already translated preceding words of the sequence of words, in particular, on the basis of the preceding one or two words of the sequence, by means of an example of the method for statistical language modeling as disclosed herein, i.e. the at least one word candidate determined by an example of the method for statistical language modeling is chosen as the translation. The words that are to be translated may be provided as typed or written text or in form of acoustical speech signals.

Further, it is provided a method for text-to-speech processing, comprising

providing a database comprising n-grams;

detecting typed or hand-written text comprising words;

recognizing at least one of the words of the detected typed or hand-written text, in particular, those following one or more already recognized words, on the basis of the n-grams of the database and as the at least one word candidate determined by means of the method for statistical language modeling according to one of the preceding examples of the method for statistical language modeling for which the calculated probability exceeds the predetermined threshold; and

outputting a synthetic speech signal based on the recognized at least one word (i.e. the determined at least one word candidate for which the calculated probability exceeds the predetermined threshold).

In the above methods for machine translation and text-to-speech processing the n-grams of the database represent the training corpus and the n already translated or already recognized words, respectively, represent the provided predetermined number of words in the predetermined order of the method for statistical language modeling of claim 1.

Generation of N-best lists as described in the context of method for speech recognition may also be performed in the method for machine translation or for text-to-speech processing, respectively.

The present invention also provides a computer program product, comprising one or more computer readable media having computer-executable instructions for performing the steps of an example of one of the above described methods.

Furthermore, the present invention provides a system for speech recognition according to claim 10.

Digital signals are subject to a subsequent spectral analysis carried out by the processing means of the claimed system for speech recognition. Representations of the speech waveforms may be sampled at a rate between 6.6 kHz and 20 kHz and may derived from the short term power spectra and can represent a sequence of characterizing vectors containing values of what is generally referred to as features/feature parameters. The values of the feature parameters can be used in the analysis of the speech signal as known in the art.

The recognizing means may further be configured to generate an N-best list of word candidates recognized as the at least one of the spoken words and to assign a score to each of the word candidates of the N-best list and the score may represent the probability of the word candidate calculated by the recognizing means.

Implementation of examples of the herein disclosed method for speech recognition is particularly useful for embedded systems that notoriously suffer from limited computer resources. Speech recognition systems are particularly advantageous for operation of devices by speech input in situations in which the user should not be distracted by manual inputs. This is, e.g., the case in the context of navigation aids for supporting the driver of a vehicle by electronic route guidance. It is desirable that the driver can operate a vehicle navigation system by speech input. Therefore, it is provided a vehicle navigation system comprising the system for speech recognition according to one of the examples above.

Additional features and advantages of the invention will be described with reference to the drawing. In the description, reference is made to a single accompanying figure that is meant to illustrate preferred embodiments of the invention. It is understood that such an embodiment does not represent the full scope of the invention that is defined by the claims given below.

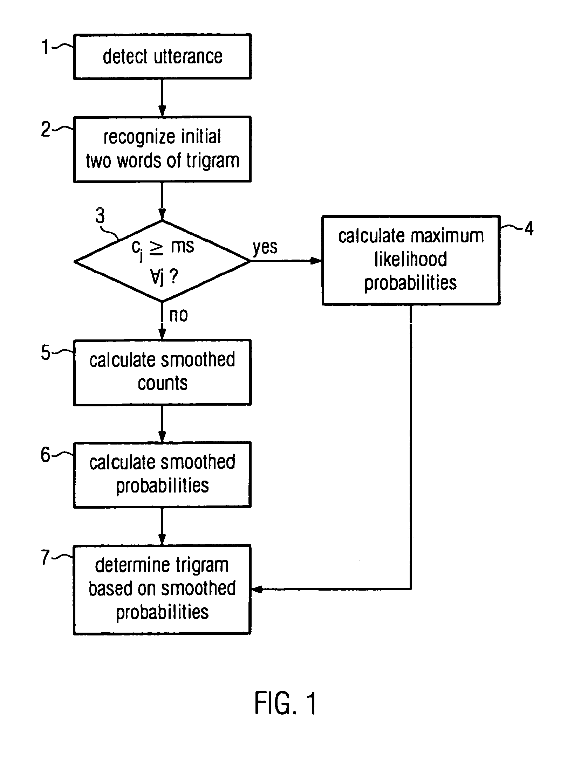

Figure 1 illustrates an example of the inventive method for speech recognition comprising calculation of a smoothed probability of word candidates.

According to the example shown in Figure 1 a speaker has uttered a sentence comprising three consecutive words a, b and c. The utterance has been detected 1 by a microphone and the corresponding microphone signal has been digitized and input in a speech recognition means. The speech recognition means has access to a database comprising a training corpus, e.g., trigrams and/or bigrams seen in a number of novels or transcripts of radio news broadcasts.

Assume that the speech recognition means has already recognized 2 the two intial words a and b of the speaker's utterance. The task is to predict the next word of the considered trigram. Based on the training corpus N possible trigrams (events) $e_1$ to $e_N$ starting with the words a and b are known. Each trigram $e_j$ (j = 1, .., N) is seen in the corpus with a frequency of (number of counts) $c_j$.

In order to predict the word c completing the trigram, the speech recognition means calculates probabilities for different word candidates for c, i.e. probabilities for completed trigrams including a and b. According to the present example of the invention, a smoothed probability is calculated in the case that not all counts $c_j$ lie above a threshold given by some "floor" value m, i.e. a predetermined real positive number, multiplied by the overall counts $S = \sum_{j=1}^{N} c_j$.

If it is determined 3 that all counts do not fall below the above-mentioned threshold, i.e. $C_j \geq mS \ \forall j$, the likelihood probabilities for all events $e_j$, i.e. $c_j / S$, are calculated 4. If, however, at least one of the counts falls below the above-mentioned threshold, smoothed counts are calculated 5.

The idea behind this procedure is to guarantee that the probabilities calculated for the event, i.e. the trigrams in the present example, never falls below a predetermined limit given by the floor value mentioned above. Thereby, some discounting is performed by redistributing high standard probability values, e.g., maximum-likelihood probabilities, to low probability values (according to the well-known concept of discounting). For the floor value any real positive number smaller than the reciprocal value of the number of events (trigrams in this example) N can be chosen.

In detail, the calculation of the smoothed counts $c_j'$ is performed as follows. Based on a choice for the floor value m, a real number $\alpha$ is calculated that satisfies the condition

$$\sum_{j=1}^{N}(\bar{c}_j - \alpha\sqrt{\tilde{c}}) = S \equiv \sum_{j=1}^{N} c_j$$

where

$$\tilde{c}_j \equiv \begin{cases} c_j(S-c_j)/S, & \text{if } c_j > mS \\ 0, & \text{else} \end{cases} \quad \text{and} \quad \bar{c}_j = \begin{cases} c_j, & \text{if } c_j > mS \\ mS, & \text{else} \end{cases}$$

Thus, $\alpha$ is calculated by

$$\alpha = \frac{\sum_{j=1}^{N}\bar{c}_j - S}{\sum_{j=1}^{N}\sqrt{\tilde{c}_j}}$$

If the denominator of the above equation is zero, i.e. $\tilde{c}_j = 0 \; \forall j$, no count exceeds mS and $S \le mNS$ holds implying $m \ge 1/N$. On the other hand, per definition m should be less or equal to $1/N$. Thus, all counts are equal to mS implying a maximum-likelihood probability of each event of m. Thus, in this case the maximum-likelihood probabilities are calculated 4, since it is guaranteed that these probability values do not fall below m. In other words, no smoothing is necessary, if $\tilde{c}_j = 0 \; \forall j$.

On the other hand, if there is at least one count with $c_j < mS$, smoothed counts are calculated by means of $\alpha$ by $c_j' = \bar{c}_j - \alpha\sqrt{\tilde{c}}$, $j = 1,.., N$. By means of the smoothed counts $c_j'$ smoothed probabilities for each event $e_j$ are calculated by $p_j = c_j' / S$. It is noted that $c_j' \le c_j$ for all j with $c_j \ge mS$ which accounts for the "discounting" property of the inventive probability smoothing. The above-described example of the inventive method includes calculation of a smoothed probability based on the maximum-likelihood probability $c_j / S$ at least in the sense that $\tilde{c}_j$ is calculated by $(S - c_j)c_j/S$, if $c_j > mS$.

If for some event, i.e. for some index j, the thus calculated smoothed probability $p_j$ is less than the floor value m, iteration of the above calculations is performed to obtain a sequence of probabilities that is inductively defined by $p_j^{(0)} = c_j / S$; $p_j^{(n)} = <(p_j^{(n-1)})>$ where the symbol < > denotes iterative calculation of $p_j^{(n)}$ by means of iteratively calculated smoothed counts $c_j'$. This means that calculation of the smoothed counts $c_j' = \bar{c}_j - \alpha\sqrt{\tilde{c}}$, $j = 1,.., N$ is performed by calculating $\bar{c}_j^{(n)}$ from $\bar{c}_j^{(n-1)}$ and $\tilde{c}_j^{(n)}$ $\tilde{c}_j^{(n)}$ from $\tilde{c}_j^{(n-1)}$. If after $k < N$ steps the iteration results in $p_j^{(k)} < m$ for at least one index j, then, the relation $c_j^{(k)} < mS < c_j^{(k+1)}$ holds which implies that iteration becomes stationary after less than $L(0) \le N$ steps, with $L(n)$ being defined as the number of all counts satisfying $c_j^{(k)} < mS$. This guarantees fast convergence of the iteration.

Based on the probabilities calculated as described above, the trigram that has the highest probability 7 can be chosen in order to determine the word c of the trigram under consideration.

It is also noted that the above described example of the herein disclosed method may advantageously be combined with a backing-off strategy, e.g., the Katz's Backing-Off according to which an n-gram probability is calculated when the available training corpus is sufficiently large for estimating reliable probability values and back-off to the (n-1)-gram probability is employed if not. Several backing-off methods as known in the literature can be combined with the above-described smoothing.

In particular, some interpolation according to $p_j[\text{n-gram}] = \lambda \, c_j[\text{n-gram}]/S[\text{n-gram}] + (1-\lambda) \, p_j(\text{n-1})\text{-gram}$. The interpolation constant $0 \leq \lambda \leq 1$ can be chosen according to various smoothing interpolation technique as, e.g., the modified Kneser-Ney method (for an overview see, e.g., "An Empirical Study of Smoothing Techniques for Language Modeling" by Stanley F. Chen and Joshua T. Goodman, Technical Report TR-10-98, Computer Science Group, Harvard University, 1998). The Kneser-Ney approach makes use of the idea that the lower-order model is significant only when the count is small in the higher-order model and is of particular usefulness for a relatively small amount of training data as it is the case in the context of speech recognition.

**Claims**

1. Method for statistical language modeling, comprising the steps of:

> providing a predetermined number of words in a predetermined order;
> providing a training corpus comprising a predetermined number of sequences of words, wherein each of the sequences of words consists of the provided predetermined number of words in the predetermined order followed by at least one additional word;
> providing word candidates and for each word candidate calculating on the basis of the training corpus the probability that the word candidate follows the provided predetermined number of words; and
> determining at least one word candidate for which the calculated probability exceeds a predetermined threshold; wherein
> the probabilities of the word candidate are calculated based on smoothed maximum-likelihood probabilities calculated for the sequences of words of the training corpus, wherein the smoothed maximum-likelihood probabilities are larger than or equal to a predetermined real positive number that is less than or equal to the reciprocal value of the predetermined number of sequences of words of the training corpus; and
> the probability of each of the word candidates is calculated based on the maximum-likelihood probability, $c_j / S$, for each sequence of words comprising or consisting of the provided predetermined number of words in the predetermined order followed by the word candidate, if none of the observed frequencies, $c_j$, of the sequences of words of the training corpus falls below the predetermined real positive number, m, that is less than or equal to the reciprocal value of the predetermined number of sequences of words multiplied by the overall frequency of all of the predetermined number of sequence of words of the training corpus, S

$$= \sum_{j=1}^{N} c_j \text{, i.e., if } c_j \geq mS \; \forall \, j,$$

> wherein if $c_j < m \, S$ for at least one j, where $c_j$ denotes the observed frequency of the j-th one of N sequences of words of the training corpus and S is the overall frequency of all observed sequences of words of the training

> corpus $S = \sum_{j=1}^{N} c_j$ and

> m is the predetermined real positive number less than or equal to the reciprocal value of the predetermined number N of sequences of words, the calculation of the probabilities of the word candidates $p_j$ comprises the following steps:

> > a) calculating real numbers a by

$$\alpha = \frac{\sum_{j=1}^{N} \bar{c}_j - S}{\sum_{j=1}^{N} \sqrt{\bar{c}_j}}$$

with

$$\tilde{c}_j \equiv \begin{cases} c_j(S - c_j)/S, & \text{if } c_j > mS \\ 0, & \text{else} \end{cases} \quad \text{and } \bar{c}_j = \begin{cases} c_j, & \text{if } c_j > mS \\ mS, & \text{else} \end{cases}$$

b) calculating smoothed counts $c_j' = \bar{c}_j - \alpha \sqrt{\tilde{c}_j}$

c) calculating the smoothed probabilities $p_j$ by

$$p_j = c_j' / S$$

and

d) determining the probability of each of the word candidates from $p_j$, if $p_j \geq m$.

2. Method according to claim 1, wherein, if at least one $p_j$ as calculated in step c) is less than the predetermined positive real number m that is less than or equal to the reciprocal value of the predetermined number of sequences of words N, the probability of each word candidate is determined by iteration of the steps a) to c) of claim 1 according to the inductive sequence of probabilities $p_j^{(n)}$ starting with the maximum-likelihood probability $p_j^{(0)} = c_j / S$ and further defined by $p_j^{(n)} = (p_j^{(n-1)})>$ where $< >$ denotes iterative calculation of the smoothed counts $c_j'$.

3. Method according to one of the preceding claims, wherein each of the sequences of words comprised in the training corpus consists of bigrams and/or trigrams and/or four-grams.

4. Method according to one of the preceding claims, wherein the probability of each of the word candidates is calculated on the basis of n-grams and (n-1)-grams.

5. Method for speech recognition, comprising
   providing a database comprising n-grams;
   detecting and digitizing a verbal utterance including spoken words; and
   recognizing at least one of the spoken words on the basis of the n-grams of the database as the at least one word candidate determined by means of the method for statistical language modeling according to one of the preceding claims for which the calculated probability exceeds the predetermined threshold.

6. Method for speech recognition according to claim 5, further comprising generating a recognition result consisting of an N-best list of word candidates determined by means of the method for statistical language modeling according to one of the claims 1 - 4, wherein each word candidate is assigned a score representing the probability score representing the probability that the word candidate follows a predetermined number of spoken and already recognized words.

7. Method for machine translation of a sequence of words, comprising
   providing a database comprising n-grams; and
   translating the n+1-th word of the sequence of words on the basis of n translated preceding words of the sequence of words, in particular, on the basis of the preceding one or two words of the sequence, into the at least one word candidate determined by means of the method for statistical language modeling according to one of the claims 1 - 4 for which the calculated probability exceeds the predetermined threshold.

8. Method for text-to-speech processing, comprising
   providing a database comprising n-grams;
   detecting typed or hand-written text comprising words;
   recognizing at least one of the words of the detected typed or hand-written text on the basis of the n-grams of the database as the at least one word candidate determined by means of the method for statistical language modeling according to one of the claims 1 - 4 for which the calculated probability exceeds the predetermined threshold; and
   outputting a synthetic speech signal based on the recognized at least one word.

9. Computer program product, comprising one or more computer readable media having computer-executable instructions for performing the steps of the method according to one of the Claims 1 - 8.

10. System for speech recognition, comprising
    a database comprising n-grams and word candidates;
    an interface configured to detect at least one speech signal comprising spoken words;
    a processing means configured to digitize the detected at least one speech signal; and
    a recognizing means configured to
    calculate for word candidates the probability that the word candidate follows a predetermined number of the spoken words based on a smoothed maximum-likelihood probability for each n-gram, wherein the smoothed maximum-liketihood probability is larger than or equal to a predetermined real positive number that is less than or equal to the reciprocal value of the number of n-grams comprised in the database; and wherein
    the probability of each of the word candidates is calculated based on the maximum-likelihood probability, $c_j / S$, for each sequence of words comprising or consisting of the provided predetermined number of words in the predetermined order followed by the word candidate, if none of the observed frequencies, $c_j$, of the sequences of words of the training corpus falls below the predetermined real positive number, m, that is less than or equal to the reciprocal value of the predetermined number of sequences of words multiplied by the overall frequency of all of the predetermined number of sequences of words of the training corpus, $S = \sum_{j=1}^{N} c_j$, i.e., if $c_j \geq mS \; \forall \; j$,

    wherein if $c_j < m\,S$ for at least one j, where $c_j$ denotes the observed frequency of the j-th one of N sequences of words of the training corpus and S is the overall frequency of all observed sequences of words of the training corpus $S = \sum_{j=1}^{N} c_j$ and m is the predetermined real positive number less than or equal to the reciprocal value of the predetermined number N of sequences of words, the calculation of the probabilities of the word candidates $p_j$ comprises the following steps:

    a) calculating real numbers a by

    $$a = \frac{\sum_{j=1}^{N} \bar{c}_j - S}{\sum_{j=1}^{N} \sqrt{\bar{c}_j}}$$

    with

    $$\tilde{c}_j = \begin{cases} c_j(S - c_j)/S, & \text{if } c_j > mS \\ 0, & \text{else} \end{cases} \quad \text{and} \quad \bar{c}_j = \begin{cases} c_j, & \text{if } c_j > mS \\ mS, & \text{else} \end{cases}$$

b) calculating smoothed counts $c_j' = \overline{c}_j - \alpha \sqrt{\widetilde{c}_j}$

c) calculating the smoothed probabilities $p_j$ by

$$p_j = c_j' / S$$

and

d) determining the probability of each of the word candidates from $p_j$, if $p_j \geq m$

and wherein the recognizing means is configured to
recognize at least one of the spoken words as the at least one word candidate for which the calculated probability exceeds a predetermined threshold.

11. System for speech recognition according to claim 10, wherein the recognizing means is configured to generate an N-best list of word candidates recognized as the at least one of the spoken words and to assign a score to each of the word candidates of the N-best list and wherein the score represents the probability of the word candidate calculated by the recognizing means.

12. Vehicle navigation system comprising the system for speech recognition according to one of the claims 10 or 11.


**Patentansprüche**

1. Verfahren zur statistischen Sprachmodellierung, das die Schritte umfasst:

   Bereitstellen einer vorbestimmten Anzahl an Wörtern in einer vorbestimmten Ordnung;
   Bereitstellen eines Trainingskorpus, der eine vorbestimmte Anzahl an Sequenzen von Wörtern umfasst, wobei jede der Sequenzen von Wörtern aus der bereitgestellten vorbestimmten Anzahl an Wörtern in der vorbestimmten Ordnung gefolgt von zumindest einem zusätzlichen Wort besteht;
   Bereitstellen von Wortkandidaten und für jeden Wortkandidaten auf der Grundlage des Trainingskorpus Berechnen der Wahrscheinlichkeit, dass der Wortkandidat der bereitgestellten vorbestimmten Anzahl an Wörtern folgt; und
   Bestimmen zumindest eines Wortkandidaten, für den die berechnete Wahrscheinlichkeit eine vorbestimmte Schwelle überschreitet;
   wobei
   die Wahrscheinlichkeiten des Wortkandidaten auf der Grundlage geglätteter Maximum-Likelihood-Wahrscheinlichkeiten berechnet werden, die für die Sequenzen von Wörtern des Trainingskorpus berechnet werden, wobei die geglätteten Maximum-Likelihood-Wahrscheinlichkeiten größer als eine vorbestimmte reelle positive Zahl oder gleich einer vorbestimmten reellen positiven Zahl sind, die kleiner ist als der reziproke Wert oder gleich ist dem reziproken Wert der vorbestimmten Anzahl an Sequenzen von Wörtern des Trainingskorpus; und
   die Wahrscheinlichkeit von jedem der Wortkandidaten auf der Grundlage der Maximum-Likelihood-Wahrschein-lichkeit, $c_j / S$, für jede Sequenz von Wörtern, die die bereitgestellte vorbestimmte Anzahl an Wörtern in der vorbestimmten Ordnung gefolgt von dem Wortkandidat umfasst oder aus der bereitgestellten vorbestimmten Anzahl an Wörtern in der vorbestimmten Ordnung gefolgt von dem Wortkandidat besteht, berechnet wird, wenn keine der beobachteten Frequenzen, $c_j$, der Sequenzen von Wörtern des Trainingskorpus unterhalb der vorbestimmten reellen positiven Zahl, m, liegt, die kleiner ist als der reziproke Wert oder gleich ist dem reziproken Wert der vorbestimmten Anzahl an Sequenzen von Wörtern multipliziert mit der Gesamtfrequenz sämtlicher der vorbestimmten Anzahl an Sequenzen von Wörtern des Trainingskorpus, $S = \sum_{j=1}^{N} c_j$ , i.e., wenn $c_j \geq mS \; \forall \, j$,

   wobei, wenn $c_j < mS$ für zumindest ein j gilt, wobei $c_j$ die beobachtete Frequenz der j-ten der N Sequenzen von Wörtern des Trainingskorpus ist, und S die Gesamtfrequenz sämtlicher beobachteter Sequenzen von Wörtern des Trainingskorpus $S = \sum_{j=1}^{N} c_j$ ist und m die vorbestimmte positive reelle Zahl ist, die kleiner ist als der reziproke Wert oder gleich ist dem reziproken Wert der vorbestimmten Anzahl N an Sequenzen von Wörtern ist, die Berechnung der Wahrscheinlichkeiten von Wortkandidaten $p_j$ die folgenden Schritte umfasst

a) Berechnen reeller Zahlen $\alpha$ durch

$$\alpha = \frac{\sum_{j=1}^{N} \overline{c}_j - S}{\sum_{j=1}^{N} \sqrt{\widetilde{c}_j}}$$

mit

$$\widetilde{c}_j \equiv \begin{cases} c_j(S - c_j)/S, & \text{wenn } c_j > mS \\ 0, & \text{sonst} \end{cases} \quad \text{und} \quad \overline{c}_j = \begin{cases} c_j, & \text{wenn } c_j > mS \\ mS, & \text{sonst} \end{cases}$$

b) Berechnen geglätteter Werte $c_j' = \overline{c}_j - \alpha \sqrt{\widetilde{c}_j}$

c) Berechnen der geglätteten Wahrscheinlichkeiten $p_j$ durch

$$p_j = c_j' / S$$

und

d) Bestimmen der Wahrscheinlichkeit von jedem der Wortkandidaten aus $p_j$, wenn $p_j \geq m$.

**2.** Verfahren gemäß Anspruch 1, in dem, wenn zumindest ein in Schritt c) berechnetes $p_j$ kleiner als die vorbestimmte reelle Zahl m ist, die kleiner ist als der reziproke Wert oder gleich ist dem reziproken Wert der vorbestimmten Anzahl an Sequenzen von Wörtern N, die Wahrscheinlichkeit von jedem Wortkandidaten durch Iteration der Schritte a) bis c) von Anspruch 1 gemäß der induktiven Sequenz von Wahrscheinlichkeiten $p_j^{(n)}$ startend mit der Maximum-Likelihood-Wahrscheinlichkeit $p_j^{(0)} = c_j / S$ und weiterhin definiert durch $p_j^{(n)} = <( p_j^{(n-1)})>$, wobei $< >$ die iterative Berechnung der geglätteten Werte $c_j'$ bezeichnet, bestimmt wird.

**3.** Verfahren gemäß einem der vorhergehenden Ansprüche, in dem jede der Sequenzen von Wörtern, die in dem Trainingskorpus enthalten ist, aus Bigrammen und/oder Trigrammen und/oder Vier-Grammen besteht.

**4.** Verfahren gemäß einem der vorhergehenden Ansprüche, in dem die Wahrscheinlichkeit von jedem Wortkandidaten auf der Grundlage von n-Grammen und (n-1)-Grammen berechnet wird.

**5.** Verfahren zur Spracherkennung, das umfasst
Bereitstellen einer Datenbank, die N-Gramme umfasst;
Detektieren und Digitalisieren einer verbalen Äußerung, die gesprochene Wörter enthält; und
Erkennen zumindest eines der gesprochenen Wörter auf der Grundlage der N-Gramme der Datenbank als den zumindest einen Wortkandidaten, der mithilfe des Verfahrens zur statistischen Sprachmodellierung gemäß einem der vorhergehenden Ansprüche bestimmt wird, für den die berechnete Wahrscheinlichkeit die vorbestimmte Schwelle überschreitet.

**6.** Verfahren gemäß Anspruch 5, das weiterhin umfasst das Erzeugen eines Erkennungsergebnisses, das aus einer N-Best-Liste von Wortkandidaten besteht, die mithilfe des Verfahrens zur statistischen Sprachmodellierung gemäß einem der vorhergehenden Ansprüche 1 - 4 bestimmt wird, wobei jedem Wortkandidat eine Bewertung zugewiesen wird, die die Wahrscheinlichkeitsbewertung darstellt, die die Wahrscheinlichkeit dafür darstellt, dass der Wortkandidat einer vorbestimmten Anzahl an gesprochenen und bereits erkannten Wörtern folgt.

7. Verfahren zur Maschinenübersetzung einer Sequenz von Wörtern, das umfasst
Bereitstellen einer Datenbank, die N-Gramme umfasst; und
Übersetzen des n+1-ten Wortes der Sequenz von Wörtern auf der Grundlage von n übersetzten vorausgehenden Wörtern der Sequenz von Wörtern, insbesondere auf der Grundlage des vorhergehenden Wortes oder der vorhergehenden zwei Wörter der Sequenz, in den zumindest einen Wortkandidaten, der mithilfe des Verfahrens zur statistischen Sprachmodellierung gemäß einem der Ansprüche 1 - 4 bestimmt wird, für den die berechnete Wahrscheinlichkeit die vorbestimmte Schwelle überschreitet.

8. Verfahren zur Text-zu-Sprache-Verarbeitung, das umfasst
Bereitstellen einer Datenbank, die N-Gramme umfasst; und
Detektieren eines getippten oder handgeschriebenen Textes, der Wörter umfasst;
Erkennen zumindest eines der Wörter des getippten oder handgeschriebenen Textes auf der Grundlage der N-Gramme der Datenbank als den zumindest einen Wortkandidaten, der mithilfe des Verfahrens zur statistischen Sprachmodellierung gemäß einem der Ansprüche 1 - 4 bestimmt wird, für den die berechnete Wahrscheinlichkeit die vorbestimmte Schwelle überschreitet.

9. Computerprogrammprodukt, das ein oder mehrere computerlesbare Medien umfasst, die computerausführbare Anweisungen zum Ausführen der Schritte des Verfahrens gemäß einem der Ansprüche 1 - 8 aufweisen.

10. System zur Spracherkennung, das umfasst
eine Datenbank, die N-Gramme und Wortkandidaten umfasst;
ein Interface, das dazu ausgebildet ist, zumindest ein Sprachsignal zu detektieren, das gesprochene Wörter enthält;
eine Verarbeitungseinrichtung, die dazu ausgebildet ist, das detektierte zumindest eine Sprachsignal zu digitalisieren; und
eine Erkennereinrichtung, die dazu ausgebildet ist,
die Wahrscheinlichkeit für Wortkandidaten dafür, dass die Wortkandidaten einer vorbestimmten Anzahl der gesprochenen Wörter folgen, auf der Grundlage einer geglätteten Maximum-Likelihood-Wahrscheinlichkeit für jedes N-Gramm zu berechnen, wobei die geglättete Maximum-Likelihood-Wahrscheinlichkeit größer als eine vorbestimmte reelle positive Zahl oder gleich einer vorbestimmten reellen positiven Zahl ist, die kleiner ist als der reziproke Wert oder gleich ist dem reziproken Wert der vorbestimmten Anzahl an N-Grammen, die in der Datenbank enthalten sind; und wobei
die Wahrscheinlichkeit von jedem der Wortkandidaten auf der Grundlage der Maximum-Likelihood-Wahrscheinlichkeit, $c_j / S$, für jede Sequenz von Wörtern, die die bereitgestellte vorbestimmte Anzahl an Wörtern in der vorbestimmten Ordnung gefolgt von dem Wortkandidat umfasst oder aus der bereitgestellten vorbestimmten Anzahl an Wörtern in der vorbestimmten Ordnung gefolgt von dem Wortkandidat besteht, berechnet wird, wenn keine der beobachteten Frequenzen, $c_j$, der Sequenzen von Wörtern des Trainingskorpus unterhalb der vorbestimmten reellen positiven Zahl, m, liegt, die kleiner ist als der reziproke Wert oder gleich ist dem reziproken Wert der vorbestimmten Anzahl an Sequenzen von Wörtern multipliziert mit der Gesamtfrequenz sämtlicher der vorbestimmten Anzahl an Sequenzen von Wörtern des Trainingskorpus, $S = \sum_{j=1}^{N} c_j$ , i.e., wenn $c_j \geq mS \; \forall \; j$,

wobei, wenn $c_j < mS$ für zumindest ein j gilt, wobei $c_j$ die beobachtete Frequenz der j-ten der N Sequenzen von Wörtern des Trainingskorpus ist, und S die Gesamtfrequenz sämtlicher beobachteter Sequenzen von Wörtern des Trainingskorpus $S = \sum_{j=1}^{N} c_j$ ist und m die vorbestimmte positive reelle Zahl ist, die kleiner ist als der reziproke Wert oder gleich ist dem reziproken Wert der vorbestimmten Anzahl N an Sequenzen von Wörtern ist, die Berechnung der Wahrscheinlichkeiten von Wortkandidaten $p_j$ die folgenden Schritte umfasst

d) Berechnen reeller Zahlen $\alpha$ durch

$$\alpha = \frac{\sum_{j=1}^{N} \overline{c}_j - S}{\sum_{j=1}^{N} \sqrt{\widetilde{c}_j}}$$

mit

$$\widetilde{c}_j \equiv \begin{cases} c_j(S - c_j)/S, & \text{wenn } c_j > mS \\ 0, & \text{sonst} \end{cases} \quad \text{und} \quad \overline{c}_j = \begin{cases} c_j, & \text{wenn } c_j > mS \\ mS, & \text{sonst} \end{cases}$$

e) Berechnen geglätteter Werte $c_j' = \overline{c}_j - \alpha \sqrt{\widetilde{c}_j}$

f) Berechnen der geglätteten Wahrscheinlichkeiten $p_j$ durch

$$p_j = c_j' / S$$

und
d) Bestimmen der Wahrscheinlichkeit von jedem der Wortkandidaten aus $p_j$, wenn $p_j \geq m$

und wobei die Erkennereinrichtung dazu ausgebildet ist,
zumindest eines der gesprochenen Wörter als den zumindest einen Wortkandidaten zu erkennen, für den die berechnete Wahrscheinlichkeit eine vorbestimmte Schwelle überschreitet.

**11.** System zur Spracherkennung gemäß Anspruch 10, in dem die Erkennereinrichtung dazu ausgebildet ist, eine N-Best-Liste von Wortkandidaten zu erzeugen, die als das zumindest eine der gesprochenen Wörter erkannt werden, und jedem der Wortkandidaten der N-Best-Liste eine Bewertung zuzuweisen, und wobei die Bewertung die Wahrscheinlichkeit des Wortkandidaten, die von der Erkennereinrichtung berechnet wird, darstellt.

**12.** Fahrzeugnavigationssystem, das das System zur Spracherkennung gemäß Anspruch 10 oder 11 umfasst.

**Revendications**

**1.** Procédé de modélisation statistique du langage, comprenant les étapes consistant à :

fournir un nombre prédéterminé de mots dans un ordre prédéterminé,
fournir un corpus d'apprentissage comprenant un nombre prédéterminé de séquences de mots, dans lequel chacune des séquences de mots est constituée du nombre prédéterminé fourni de mots dans l'ordre prédéterminé, suivi par au moins un mot supplémentaire,
fournir des candidats mots et, pour chaque candidat mot, calculer sur la base du corpus d'apprentissage la probabilité de ce que le candidat mot suit le nombre prédéterminé fourni de mots, et
déterminer au moins un candidat mot pour lequel la probabilité calculée dépasse un seuil prédéterminé, dans lequel
les probabilités du candidat mot sont calculées sur la base de probabilités lissées de maximum de vraisemblance, calculées pour les séquences de mots du corpus d'apprentissage, les probabilités lissées de maximum de vraisemblance étant supérieures ou égales à un nombre réel positif prédéterminé qui est inférieur ou égal à la valeur réciproque du nombre prédéterminé de séquences de mots du corpus d'apprentissage, et

la probabilité de chacun des candidats mots est calculée sur la base de la probabilité de maximum de vraisemblance, $c_j / S$, pour chaque séquence de mots comprenant le nombre prédéterminé fourni de mots ou constituée de ceux-ci dans l'ordre prédéterminé, suivis par le candidat mot, si aucune des fréquences observées, $c_j$, des séquences de mots du corpus d'apprentissage ne passe en dessous du nombre réel positif prédéterminé, $m$, qui est inférieur ou égal à la valeur réciproque du nombre prédéterminé de séquences de mots multipliée par la fréquence globale de la totalité du nombre prédéterminé de séquences de mots du corpus d'apprentissage,

$$S = \sum_{j=1}^{N} c_j \quad \text{c'est-à-dire si } c_j \geq m\, S, \ \forall\, j.$$

dans laquelle, si $c_j < m\, S$ pour au moins une valeur $j$, où $c_j$ indique la fréquence observée de la $j$ ème des $N$ séquences de mots du corpus d'apprentissage et où $S$ est la fréquence globale de la totalité des séquences de mots observées du corpus d'apprentissage $\quad S = \sum_{j=1}^{N} c_j \quad ,$

et où $m$ est le nombre réel positif prédéterminé inférieur ou égal à la valeur réciproque du nombre prédéterminé $N$ de séquences de mots, alors le calcul des probabilités des candidats mots $p_j$ comprend les étapes suivantes :

   a) calculer des nombres réels $\alpha$ grâce à

$$\alpha = \frac{\sum_{j=1}^{N} \bar{c}_j - S}{\sum_{j=1}^{N} \sqrt{\tilde{c}_j}}$$

   avec

$$\tilde{c}_j \equiv \begin{cases} c_j(S - c_j)/S, & \text{si } c_j > m\, S \\ 0, & \text{sinon} \end{cases} \qquad \text{et} \qquad \bar{c}_j = \begin{cases} c_j & \text{si } c_j > m\, S \\ mS & \text{sinon} \end{cases}$$

   b) calculer des valeurs comptées lissées $\quad c'_j = \bar{c}_j - \alpha\sqrt{\tilde{c}_j}$

   c) calculer les probabilités lissées $p_j$ grâce à

$$p_j \ = \ c'_j \ / \ S$$

   et

   d) déterminer la probabilité de chacun des candidats mots à partir de $p_j$ si $p_j \geq m$.

2. Procédé selon la revendication 1, dans lequel, si au moins une probabilité $p_j$, telle qu'elle est calculée à l'étape c), est inférieure au nombre réel positif prédéterminé, $m$, qui est inférieur ou égal à la valeur réciproque du nombre prédéterminé $N$ de séquences de mots, la probabilité de chaque candidat mot est déterminée par itération des étapes a) à c) de la revendication 1 en fonction de la suite inductive de probabilités $p_j^{(n)}$ débutant avec la probabilité de maximum de vraisemblance $p_j^{(0)} = c_j / S$, et définie ensuite par $p_j^{(n)} = \langle (p_j^{(n-1)}) \rangle$ où $\langle \ \rangle$ définit un calcul itératif des valeurs comptées lissées $c_j'$.

3. Procédé selon l'une des revendications précédentes, dans lequel chacune des séquences de mots, comprise dans le corpus d'apprentissage, est constituée de bigrammes et/ou de trigrammes et/ou de quadrigrammes.

4. Procédé selon l'une des revendications précédentes, dans lequel la probabilité de chacun des candidats mots est calculée sur la base de n-grammes et de (n-1)-grammes.

5. Procédé de reconnaissance de la parole, comprenant la fourniture d'une base de données comprenant des n-grammes,
la détection et la numérisation d'une énonciation verbale incluant des mots prononcés, et
la reconnaissance d'au moins l'un des mots prononcés sur la base des n-grammes de la base de données comme étant le au moins un candidat mot, déterminé au moyen du procédé de modélisation statistique du langage conforme à l'une des revendications précédentes, pour lequel la probabilité calculée dépasse le seuil prédéterminé.

6. Procédé de reconnaissance de la parole selon la revendication 5, comprenant en outre la génération d'un résultat de reconnaissance constitué d'une liste des N meilleurs candidats mots déterminés au moyen du procédé de modélisation statistique du langage conforme à l'une des revendications 1 à 4, chaque candidat mot se voyant affecter une note indiquant la note de la probabilité représentant la probabilité de ce que le candidat mot suit un nombre prédéterminé de mots prononcés et déjà reconnus.

7. Procédé de traduction automatique d'une séquence de mots, comprenant
La fourniture d'une base de données comprenant des n-grammes, et
la traduction du (n+1) e mot de la séquence de mots sur la base de n mots précédents traduits appartenant à la séquence de mots, en particulier sur la base du dernier ou des deux derniers mots précédents dans la séquence, en au moins un candidat mot, déterminé au moyen du procédé de modélisation statistique du langage conforme à l'une des revendications 1 à 4, pour lequel la probabilité calculée dépasse le seuil prédéterminé.

8. Procédé de synthèse de la parole à partir du texte, comprenant
la fourniture d'une base de données comprenant des n-grammes,
la détection d'un texte dactylographié ou manuscrit comprenant des mots,
la reconnaissance d'au moins l'un des mots du texte dactylographié ou manuscrit, détecté sur la base des n-grammes de la base de données, comme étant le au moins un candidat mot, déterminé au moyen du procédé de modélisation statistique de langage conforme à l'une des revendications 1 à 4, pour lequel la probabilité calculée dépasse le seuil prédéterminé, et
l'émission en sortie d'un signal vocal synthétisé sur la base du au moins un mot reconnu.

9. Produit de programme informatique comprenant un ou plusieurs supports pouvant être lus par un ordinateur, comportant des instructions pouvant être exécutées par ordinateur afin d'effectuer les étapes du procédé conformément à l'une des revendications 1 à 8.

10. Système de reconnaissance de la parole, comprenant
une base de données comprenant des n-grammes et des candidats mots,
une interface configurée pour détecter au moins un signal vocal comprenant des mots prononcés,
un moyen de traitement configuré pour numériser le au moins un signal vocal détecté, et
un moyen de reconnaissance configuré pour
calculer, pour les candidats mots, la probabilité de ce que le candidat mot suit un nombre prédéterminé de mots prononcés sur la base d'une probabilité lissée de maximum de vraisemblance pour chaque n-gramme, la probabilité lissée de maximum de vraisemblance étant supérieure ou égale à un nombre réel positif prédéterminé qui est inférieur ou égal à la valeur réciproque du nombre de n-grammes compris dans la base de données, et dans lequel la probabilité de chacun des candidats mots est calculée sur la base de la probabilité de maximum de vraisemblance, $c_j / S$, pour chaque séquence de mots comprenant le nombre prédéterminé fourni de mots ou constituée de ceux-ci dans l'ordre prédéterminé, suivis par le candidat mot, si aucune des fréquences observées, $c_j$, des séquences de mots du corpus d'apprentissage, ne passe en dessous du nombre réel positif prédéterminé, m, qui est inférieur ou égal à la valeur réciproque du nombre prédéterminé de séquences de mots multipliée par la fréquence globale de la totalité du nombre prédéterminé de séquences de mots du corpus d'apprentissage,

$$S = \sum_{j=1}^{N} c_j \quad \text{c'est-à-dire si } c_j \geq m\, S,\ \forall\, j.$$

dans laquelle, si $c_j < m\, S$ pour au moins une valeur j, où $c_j$ indique la fréquence observée de la j ème des N séquences de mots du corpus d'apprentissage et où S est la fréquence globale de la totalité des séquences de mots observées du corpus d'apprentissage, $\quad S = \sum_{j=1}^{x} c_i$

et où m est le nombre réel positif prédéterminé inférieur ou égal à la valeur réciproque du nombre prédéterminé N de séquences de mots, alors le calcul des probabilités des candidats mots $p_j$ comprend les étapes suivantes :

a) calculer des nombres réels $\alpha$ grâce à

$$\alpha = \frac{\displaystyle\sum_{j=1}^{N} \overline{c}_j - \dfrac{5}{S}}{\displaystyle\sum_{j=1}^{N} \sqrt{\widetilde{c}_j}}$$

avec

$$\widetilde{c}_j \equiv \begin{cases} c_j (S - c_j)/5S, & \text{si } c_j > m\, S \\ 0, & \text{sinon} \end{cases} \qquad \text{et} \qquad \overline{c}_j = \begin{cases} c_j & \text{si } c_j > m\, S \\ mS & \text{sinon} \end{cases}$$

b) calculer des valeurs comptées lissées $\quad c'_j = \overline{c}_j - \alpha \sqrt{\widetilde{c}_j}$

c) calculer les probabilités lissées $p_j$ grâce à

$$p_j = c'_j\ /\ S$$

et
d) déterminer la probabilité de chacun des candidats mots à partir de $p_j$ si $p_j \geq m$
et dans lequel le moyen de reconnaissance est configuré pour
reconnaître au moins l'un des mots prononcés comme étant le au moins un candidat mot pour lequel la probabilité calculée dépasse un seuil prédéterminé.

**11.** Système de reconnaissance vocale selon la revendication 10, dans lequel le moyen de reconnaissance est configuré pour générer une liste des N meilleurs candidats mots reconnus comme étant au moins l'un des mots prononcés et pour affecter une note à chacun des candidats mots de la liste des N meilleurs, et dans lequel la note représente la probabilité du candidat mot calculée par le moyen de reconnaissance.

**12.** Système de navigation embarqué comprenant le système de reconnaissance vocale conforme à la revendication 10 ou 11.

FIG. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Chen et al.** An empirical study of smoothing techniques for language modeling. *Computer Speech and Language,* 04 October 1999, vol. 13, 359-393

- An Empirical Study of Smoothing Techniques for Language Modeling. **STANLEY F. CHEN ; JOSHUA T. GOODMAN.** Technical Report TR-10-98. Harvard University, 1998